## Europäisches Patentamt
## European Patent Office
## Office européen des brevets

(11) Veröffentlichungsnummer: **0 289 773 B1**

(12) # EUROPÄISCHE PATENTSCHRIFT

(45) Veröffentlichungstag der Patentschrift: **03.07.91**

(51) Int. Cl.⁵: **A01B 71/06**

(21) Anmeldenummer: **88104819.3**

(22) Anmeldetag: **25.03.88**

(54) Landwirtschaftliches Anhängegerät.

(30) Priorität: **03.04.87 DE 3711317**

(43) Veröffentlichungstag der Anmeldung:
**09.11.88 Patentblatt 88/45**

(45) Bekanntmachung des Hinweises auf die Patenterteilung:
**03.07.91 Patentblatt 91/27**

(84) Benannte Vertragsstaaten:
**DE FR GB**

(56) Entgegenhaltungen:
EP-A- 0 027 295     EP-A- 0 196 426
BE-A- 715 744       DE-B- 1 045 705
DE-U- 1 924 178     FR-A- 1 364 126
FR-A- 2 034 174     GB-A- 669 837
GB-A- 2 137 864     US-A- 2 531 557
US-A- 3 181 619

(73) Patentinhaber: **Maschinenfabriken Bernard Krone GmbH
Heinrich-Krone-Strasse 10
W-4441 Spelle(DE)**

(72) Erfinder: **Krone, Bernard
Bernard-Krone-Strasse
W-4441 Spelle(DE)**
Erfinder: **Horstmann, Josef, Dipl.-Ing.
Up de Gadde 72
W-4530 Ibbenbüren(DE)**

(74) Vertreter: **Busse & Busse Patentanwälte
Postfach 1226 Grosshandelsring 6
W-4500 Osnabrück(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 289 773 B1

**Beschreibung**

Die Erfindung bezieht sich auf ein landwirtschaftliches Anhängegerät, beispielsweise einen an einen Schlepper anhängbaren Ladewagen, eine gezogene Mähmaschine oder dgl.

Bei einem aus dem DE-U 19 24 178 bekannten, als an einen Schlepper anhängbarer Ladewagen zum Transport von Erntegut ausgebildeten Anhängegerät ist ein über Lauf - und Stützräder auf dem Boden abstützbarer Geräterahmen vorgesehen, der über einen Zugrahmen an den Schlepper ankoppelbar ist. Dieser Zugrahmen hat parallel schwenkbeweglich in einer in etwa parallel zum Erdboden ausgerichteten Ebene geführte Lenker sowie eine ein schlepperseitig befestigbares Koppelglied aufweisende Lenkerverbindung, wobei die Lenker um im wesentlichen aufrechte Achsen verschwenkbar einerseits am Geräterahmen und andererseits an der Lenkerverbindung festlegbar sind. Die Lenker sind einerseits in zwei am Geräterahmen ortsfesten Lenkerträgerlagern schwenkbeweglich gelagert und andererseits mit einem eine Zugöse aufweisenden Kopplungsglied gelenkig verbunden, so daß sich im Schwenkbereich eine parallelogrammartige Führung bzw. Schwenklage des Zugrahmens bzw. der Lenker ergibt. Der Zugrahmen ist in einer Straßenfahrt- sowie in einer Arbeitsstellung und damit in zwei Positionen zu arretieren. Durch die parallel bzw. parallelogrammartig geführten Lenker soll bereits bei einer Anhängung der Zugöse im Anhängemaul eines Schleppers ein Wendemanöver in günstigen Grenzen ermöglicht sein, d. h., der Einschlagwinkel mit dem Schlepper soll vergrößert werden. Bei gezogenen Ladewagen wird durch die bekannte Ausbildung des Zugrahmens hier zwar eine gewisse Verbesserung des Einschlagwinkels erreicht, die jedoch bei einem Anhängegerät beispielsweise in Gestalt einer gezogenen Mähmaschine noch nicht ausreicht und damit nicht befriedigen kann. Aus der EP-A 0 196 426 ist ein als gezogene Mähmaschine ausgebildetes landwirtschaftliches Anhängegerät bekannt, bei dem ein ebenfalls über Lauf- bzw. Stützräder auf dem Boden abstützbarer Geräterahmen über einen Zugrahmen an einen landwirtschaftlichen Schlepper ankoppelbar ist. Hier erfolgt die Ankopplung nicht über parallel bzw. parallelogrammartig geführte Lenker, sondern über ein endseitig am Zugrahmen angreifendes Lenkerteil, wobei zur Übertragung der Antriebskraft des Schleppers auf ein Getriebe des Anhängegerätes Gelenkwellenabschnitte als Übertragungsmittel vorgesehen sind, von denen ein Teilstück in im wesentlichen lenkerparalleler Lage ortsfest auf dem Lenker in Lagern drehbeweglich abstützbar ist. Die Lenkerverbindung weist zudem ein Zwischenglied auf, an dem der Lenker um eine im wesentlichen vertikal ausgerichtete Achse verschwenkbar festlegbar ist. Um bei dieser Maschine einen relativ großen Einschlagwinkel zwischen dem Schlepper und dem Anhängegerät zu erreichen, ist der Schwenkausleger insgesamt sehr lang auszubilden, um keine zu große Seitenkraft auf das Anhängegerät vorliegen zu haben, welche die Lenkbarkeit insgesamt beeinflussen könnte. Dadurch bedingt ist jedoch der Wenderadius relativ groß, was sich insbesondere bei der Mäharbeit negativ bemerkbar macht.

Aus der EP-A 0 027 295 ist ein ebenfalls als gezogene Mähmaschine ausgebildetes landwirtschaftliches Anhängegerät bekannt, bei dem zur Übertragung der Antriebskraft des Schleppers zwei Gelenkwellenabschnitte vorgesehen sind. Diese Gelenkwellenabschnitte bilden die Eingangswelle und die Ausgangswelle eines Winkelgetriebes und sind in orthogonaler Ausrichtung zueinander am Getriebegehäuse abstützbar. Das Winkelgetriebe ist symmetrisch in einem Halter mit Kupplungsstücken an den Unterlenkerarmen einer Dreipunktaufhängung angekoppelt. Von dem Winkelgetriebe aus dient ein wiederum als einteiliger Schwenkausleger ausgebildeter Zugrahmen als Verbindungsglied zum Anhängegerät, auf dem oberseitig ein Schutzgehäuse für die Antriebsriemen abgestützt ist. Das Winkelgetriebegehäuse ist dabei derart zweiteilig ausgebildet, daß der Schwenkausleger mitsamt den diesen abstützenden Winkelgetriebegehäuseteil um eine fahrtrichtungsparallele und damit im wesentlichen horizontale Achse relativ zu dem schlepperseitig befestigbaren Winkelgetriebgehäuseteil verschwenkbar ist. Obgleich bei diesem bekannten Anhängegerät bereits versucht worden ist, einen relativ großen Einschlagwinkel zwischen dem Schlepper und dem Anhängegerät zu erreichen, ist aufgrund der vorbeschriebenen Ausbildung, insbesondere aufgrund der symmetrischen Anordnung und Aufhängung des Winkelgetriebes, das Verbindungsglied und damit auch der Schwenkausleger insgesamt sehr lang auszubilden, um keine zu großen Seitenkräfte auf das Anhängegerät vorliegen zu haben. Ein langes Verbindungsglied bedingt jedoch einen großen Wenderadius, der sich bei der Mäharbeit negativ auswirkt.

Ferner müssen aufgrund der vorbeschriebenen Gestaltungselemente des bekannten Gerätes neben den Antriebskräften auch Zugkräfte, die beispielsweise bei einer Mähmaschine als Anhängegerät durch das Eigengewicht und durch die Gleitreibung der Mähorgane und durch den Widerstand des zu mähenden Erntegutes entstehen, von dem Winkelgetriebe und dem Verbindungsglied zwischen Schlepper und Anhängegerät übertragen werden. Zwischen dem Anhängegerät des Winkelgetriebes in den Unterlenkerarmen und der Befestigungsstelle am Verbindungsglied besteht darüber hinaus ein Höhenunterschied, so daß bei der Übertragung der Zugkräfte ein Biegemoment entsteht, so daß insgesamt Getriebegehäuse und

2

Verbindungsglied konstruktiv sehr aufwendig und damit auch kostenintensiv ausgebildet sein müssen.

Aus der GB-A 21 37 864 ist schließlich eine Anordnung zur Ankopplung landwirtschaftlicher Anhängegeräte an einen Schlepper bekannt, die verschiedene, einem zentralen, schlepperseitigen Kopplungsglied nachgeordnete, über schwenkbewegliche Einzellenkerteile mit diesem verbindbare Anhängeglieder zur Ankopplung mehrerer Anhängegeräte umfaßt. Hierbei sind die Einzellenkerteile jedoch auch nicht parallel voneinander abhängig schwenkbeweglich geführt, so daß auch hier die zuvor beschriebenen Probleme und Nachteile vorhanden sind.

Der Erfindung liegt daher die Aufgabe zugrunde, mit möglichst geringem Bau- und Kostenaufwand ein landwirtschaftliches Anhängegerät zu schaffen, bei dem ein möglichst kleiner Wenderadius und ein verringerter Schrägzug bzw. eine verringerte Seitenkraft auf das Anhängegerät selbst erreichbar ist und die darüber hinaus derart ausgestaltet werden kann, daß der kleine Wenderadius ohne Antriebsunterbrechung zu realisieren ist.

Zur Lösung dieser Aufgabe hat das landwirtschaftliche Anhängegerät einen vorzugsweise über Lauf - und Stützräder auf dem Boden abstützbaren Geräterahmen, der über einen Zugrahmen an einen landwirtschaftlichen Schlepper ankoppelbar ist, welcher parallelschwenkbeweglich in einer in etwa parallel zum Erdboden ausgerichteten Ebene oder einer vom Schlepper aus entgegen der Fahrtrichtung ansteigend ausgerichteten Ebene geführte Lenker sowie eine ein schlepperseitig befestigbares Koppelglied aufweisende Lenkerverbindung umfaßt, wobei die Lenker um im wesentlichen aufrechte Achsen verschwenkbar einerseits am Geräterahmen und andererseits an der Lenkerverbindung festlegbar sind, und wobei zur Übertragung der Antriebskraft des Schleppers auf ein Getriebe des Anhängegerätes Gelenkwellenabschnitte als Übertragungsmittel vorgesehen sind, von denen ein Teilstück in im wesentlichen lenkerparalleler Lage ortsfest auf einen der Lenker in Lagern drehbeweglich abstützbar ist, und wobei die Lenkerverbindung außermittig am Schlepper ankoppelbar ist sowie ein Zwischenglied aufweist, an dem um im wesentlichen vertikal ausgerichtete Achsen verschwenkbar einerseits das Koppelglied und andererseits die Lenker festlegbar sind. Hinsichtlich wesentlicher weiterer vorteilhafter Ausgestaltungen der Erfindung wird auf die Ansprüche 2 bis 12 verwiesen.

Bei dem Anhängegerät nach der Erfindung ist in bau- und kostengünstiger Weise ein außerordentlich kleiner Wenderadius bei minimalem Schrägzug bzw. bei minimal wirkender Seitenkraft zu erreichen. Darüber hinaus beinhaltet das Gerät nach der Erfindung den weiteren Vorteil, einen optimalen Einschlagwinkel zu realisieren, so daß das Vorderrad des Schleppers bei einer Kurvenfahrt und maximalem Lenkeinschlag das äußere Ende des Anhängegerätes annähernd berühren kann. Darüber hinaus ist eine Antriebsunterbrechung bei einem Wendemanöver generell nicht erforderlich, d. h. auch bei einer Stellung des Zugrahmens in einer Transport-bzw. Straßenfahrtstellung.

Ein weiterer Vorteil ergibt sich aus der vorsehbaren Strecklage des Zugrahmens einschließlich der Lenkerverbindung, wodurch das Biegemoment auf den Zugrahmen über die Zugkraft insgesamt sehr gering zu halten ist.

Weitere Vorteile und Merkmale der Erfindung ergeben sich aus der nachfolgenden Beschreibung sowie der Zeichnung, in der Ausführungsbeispiele des Anhängegerätes nach der Erfindung schematisch veranschaulicht sind. In der Zeichnung zeigen im einzelnen:

Fig. 1    eine annähernd maßstabgerechte Draufsicht eines Ausführungsbeispiels eines landwirtschaftlichen Anhängegerätes nach der Erfindung, das an einen landwirtschaftlichen Schlepper angehängt ist, in ausgeschwenkter Arbeitsstellung in der Geradeausfahrt;

Fig. 2    eine Draufsicht auf das Anhängegerät nach Fig. 1 in einer möglichen Rechtskurve in der Arbeitsstellung;

Fig. 3    eine Seitenansicht des Anhängegerätes nach Fig. 1 mit in Strichpunktlinien vereinfacht veranschaulichten Gelenkwellen;

Fig. 4    eine Draufsicht der Lenkerverbindung des Anhängegerätes nach Fig. 1 als Einzelheit Z aus Fig. 1 in vergrößerter Ansicht;

Fig. 5    eine Draufsicht auf das Anhängegerät nach Fig. 1 in einer Transport- und Straßenfahrtstellung;

Fig. 6    eine Draufsicht gemäß Fig. 5 in einer möglichen Linkskurve;

Fig. 7    eine Draufsicht des Verbindungsgliedes des Anhängegerätes nach Fig. 1 in vergrößerter Ansicht mit Hilfslinien zur Kennzeichnung der Lage der Antriebsverbindung;

Fig. 8    eine Draufsicht gemäß Fig. 1 mit Hilfslinien für eine Schemadarstellung des Längen- und Kräfteverhältnisses des Verbindungsgliedes zwischen dem Anhängegerät und einem Schlepper in vergrößertem Maßstab, und

Fig. 9    das Anhängegerät in einer Ausführungsform als Mähwerk bei einer 90° Fahrtrichtungsänderung nach rechts.

Das in den Zeichnungen veranschaulichte Anhängegerät 1 umfaßt einen Geräterahmen 2, der je nach näherer Ausgestaltung des Anhängegerätes 1 irgendeine geeignete Ausbildung hat und beispielsweise mit einer horizontalen, im Arbeitsbetrieb quer zur Fahrtrichtung ausgerichteten Traverse 3 oder dgl. ausgeführt ist. An der Vorderseite bzw. Unterseite des Geräterahmens 2 ist dieser mit vorzugsweise zum Geräterahmen 2 hin beweglichen und in ihrer Position veränderbaren Werkzeugen, Geräteteilen und dgl. versehen, wie es die jeweilige Zweckbestimmung des Anhängegerätes erfordert. Das Anhängegerät kann z. B. als Mähmaschine, Konditionierungsvorrichtung, als eine aus beiden kombinierte Maschine, als Heuwerbungsmaschine, Düngerstreuer oder dgl. ausgebildet sein.

An seiner in Fahrtrichtung F rückwärtigen Seite ist der Geräterahmen 2 mit zwei Lauf- und Stützrädern 4, 5 versehen. Diese beiden Lauf- und Stützräder 4, 5 sind mittels Radachsträgern 6, 7, die bei dem dargestellten Ausführungsbeispiel aus Hohlprofilarmen gebildet sind, an der Traverse 3 befestigt. Hierbei sind die Lauf- und Stützräder 4, 5 um Drehachsen 8, 9 an den Radachsträgern 6, 7 drehbar gelagert. An dem Geräterahmen 2 befindet sich das eigentliche Arbeitsgerät 10, welches beweglich und hydraulisch aushebbar ausgebildet sein kann. Das in den Figuren veranschaulichte Arbeitsgerät 10 ist beispielsweise ein Scheibenmähwerk mit sieben angedeuteten Schneideinheiten 11.

Das Scheibenmähwerk hat ein Hauptgetriebe 12, das zusammen mit den Schneideinheiten 11 in eine Transport- und Straßenfahrtstellung ausgehoben werden kann. Das gesamte Anhängegerät 1 wird zum Transport oder bei der Arbeit an einen Schlepper 13 angehängt und von diesem antriebsmäßig von der Zapfwelle 14 versorgt. Als Verbindungsglied 15 zwischen dem Schlepper 13 und dem Anhängegerät 1 dient ein die Lenker 16, 17 umfassender Zugrahmen 18, wobei die Lenker 16, 17 einerseits am Geräterahmen 2 bzw. an der Traverse 3 um im wesentlichen senkrecht zum Erdboden ausgerichtete bzw. um im wesentlichen aufrechte Achsen 19, 20 und andererseits über eine Lenkerverbindung 21, bestehend aus einem Koppelglied 22 und einem Zwischenglied 23, in den vorzugsweise gegen Seitenbewegungen arretierten Unterlenkerarmen 24, 25 einer Dreipunktanhängung 26 des Schleppers 13 befestigt sind.

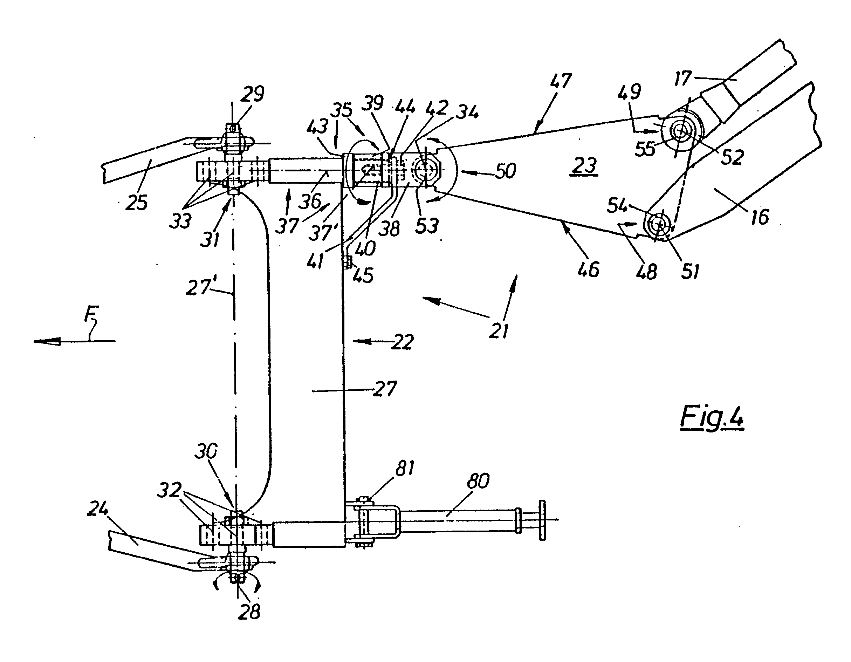

Die Ausbildung der Lenkerverbindung 21 ist insbesondere in der Fig. 4 veranschaulicht. Hierbei ist das Koppelglied 22 als Quertraverse 27 ausgebildet mit an ihren Enden angesetzten Kupplungsstücken 28, 29 in Form von Aufnahmebolzen mit einseitigem Gewindeschaft zur veränderlichen Befestigung mittels einer Mutter 30, 31 in Aufnahmebohrungen 32, 33 der Quertraverse 27. Die veränderliche Befestigung der Kupplungsstücke 28, 29 dient zur Anpassung bzw. zur Veränderung einer Drehachse 34 zur Lage der Zapfwelle 14 bei unterschiedlichen Schleppertypen 13 in oder entgegen der Fahrtrichtung F. Die Kupplungstücke 28, 29 bilden in den Unterlenkerarmen 24, 25 eine quer zur Fahrtrichtung liegende, waagerechte Schwenk- bzw. Drehachse 27'.

In Fahrtrichtung F gesehen befindet sich vorzugsweise an der äußeren rechten Seite und nach hinten gerichtet eine schwenk- bzw. drehbewegliche Verbindung 35 an dem Koppelglied 22, mit welcher das Zwischenglied 23 in zwei Bewegungsrichtungen, nämlich einer annähernd in Fahrtrichtung F liegenden Achse 36 und einer annähernd senkrecht zum Erdboden ausgerichteten Achse 34, beweglich verbunden ist. Die bewegliche Verbindung 35 ist konstruktiv in verschiedenfacher Art auszugestalten, wobei hier ausschlaggebend ist, daß die Verbindungsstelle nicht zum Erdboden hin einknicken kann. In den Ausführungsbeispiel wird die schwenk-bzw. drehbewegliche Verbindung 35 von einem mit dem Koppelglied 22 fest verbundenen Achsstück 37, welches in Ausrichtung seiner Drehachse 36 eine Gewindebohrung 37' aufweist, einem Führungsbügel 38, der fest mit einer in Fahrtrichtung F zeigenden Hülse 39 mit innenliegender, in Strichlinien angedeuteter Lagerbuchse 40 verbunden ist, und einem Widerlager-Flacheisen 41 mit einer Schraube 42 gebildet. Die Bohrung in der Hülse 39 ist in dem Verbindungsteil des Führungsbügels 38 durchgehend verlängert, so daß der Führungsbügel 38 mit Hülse 39 und der Lagerbuchse 40 auf das Ende des Achsstückes 37 übergeschoben werden kann. Das freie Ende des Achsstückes 37 ist von seinem Ansatz 43 aus längenmäßig um das Maß für eine freie Drehbeweglichkeit in der Lagerung länger ausgebildet als das Maß der Länge der Hülse 39 und der Dicke des Verbindungsteils des Führungsbügels 38 zusammen. Mit der Schraube 42 kann so das Widerlager-Flacheisen 41, dessen Breite etwa der Hälfte des Gabelabstandes des Führungsbügels 38 entspricht, mit Hilfe der Gewindebohrung 37' und Zugabe einer Unterlegscheibe 44 am Kopfende des Achsstückes 37 befestigt werden. Gesichert wird das Widerlager-Flacheisen 41 dann mit einer weiteren Schraube 45 am Koppelglied 22 (Drehsicherung). In den Schenkelstücken des Führungsbügels 38, die in der Draufsicht gesehen etwa deckungsgleich übereinander liegen, befindet sich jeweils eine Aufnahmebohrung mit der gemeinsamen Schwenk- bzw. Drehachse 34.

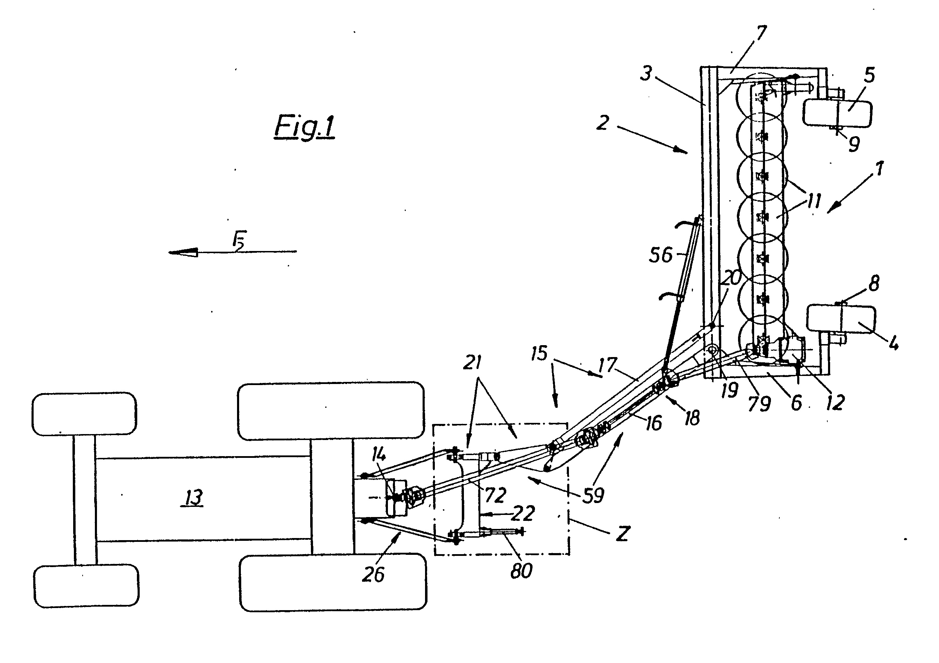

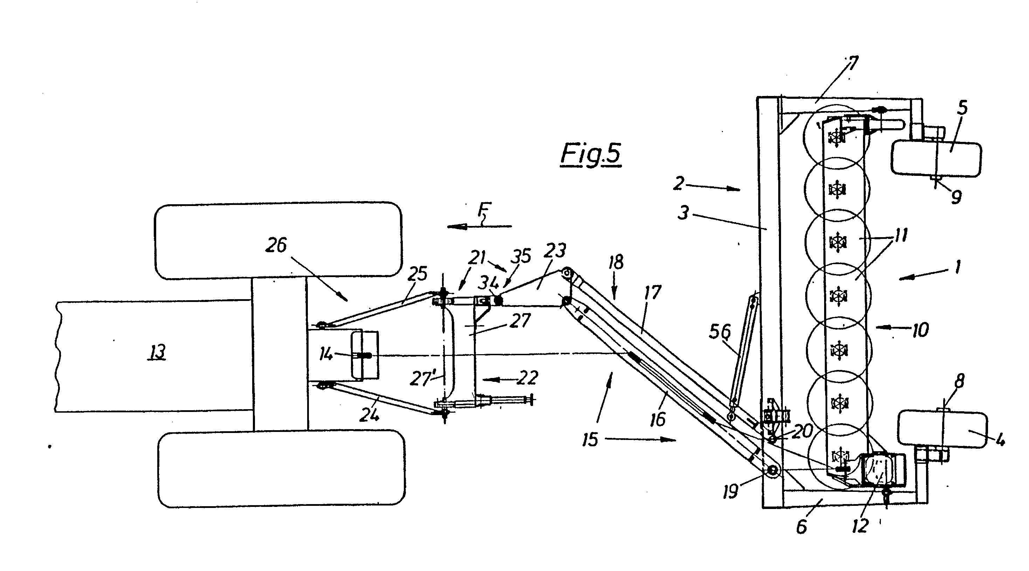

Das Zwischenglied 23 der Lenkerverbindung 21, welches in dem Führungsbügel 38 aufgenommen wird, weist vorzugsweise die Form eines Dreiecks auf, dessen längste Seiten 46, 47 in Fahrtrichtung F zusammenlaufen und dessen Lage zur Erdbodenebene etwa parallel oder entgegen der Fahrtrichtung F leicht ansteigend ausgerichtet ist. Jeweils in den Winkelbereichen 48, 49, 50 befinden sich Aufnahmebohrungen mit aufrechten, vorzugsweise parallel zueinander liegenden Schwenk- bzw. Drehachsen 34, 51, 52. Das Zwischenglied 23 ist über Bundbolzen 53, 54, 55 in den vorgesehenen Aufnahmebohrungen einerseits mit dem Führungsbügel 38 und andererseits mit den Lenkern 16, 17 drehbeweglich um die aufrechten Achsen 34, 51, 52 verbunden. Zwischen dem Lenker 16 des Verbindungsgliedes 15 und der Traverse 3 des Geräterahmens 2 befindet sich ein Stellglied in einer Ausführung als doppelt wirkender Hydraulikzylinder 56 mit nur andeutungsweise dargestellten Versorgungsleitungen 57, 58 zum Schlepper 13. Mit diesem Hydraulikzylinder 56 wird das Anhängegerät 1 von einer Transport- und Straßenfahrtstellung gemäß Fig. 5 in eine Arbeitsstellung gemäß Fig. 1 und umgekehrt geschwenkt. Zwischenstellungen sind ebenfalls möglich. Beispielsweise beim Umfahren von Hindernissen wie Leitungsmasten von Versorgungsunternehmen, Weidepfähle oder dgl. wird der Hydraulikzylinder entsprechend betätigt.

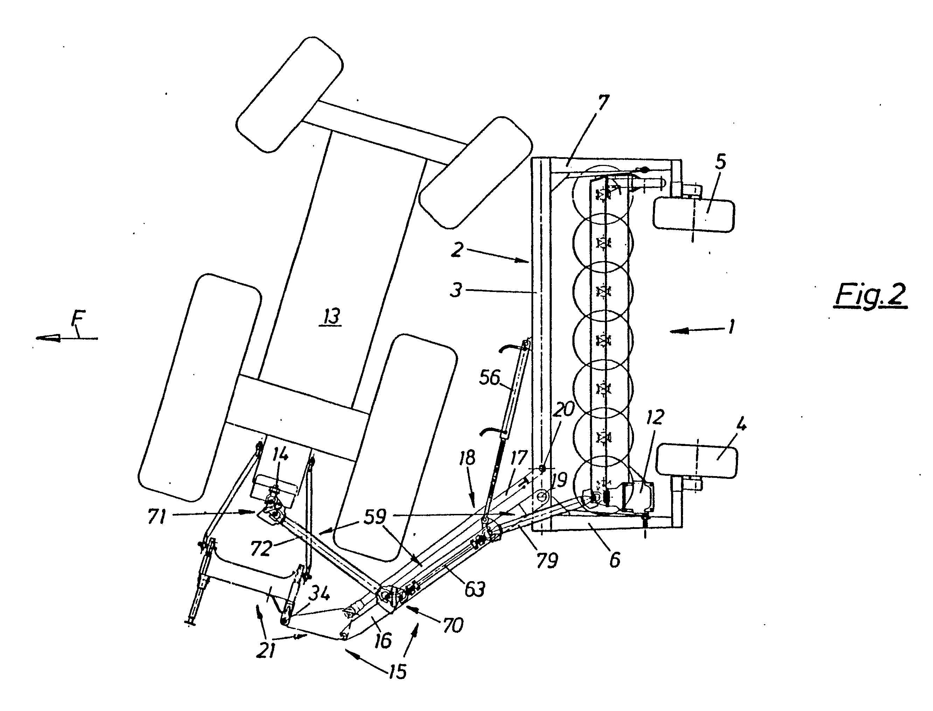

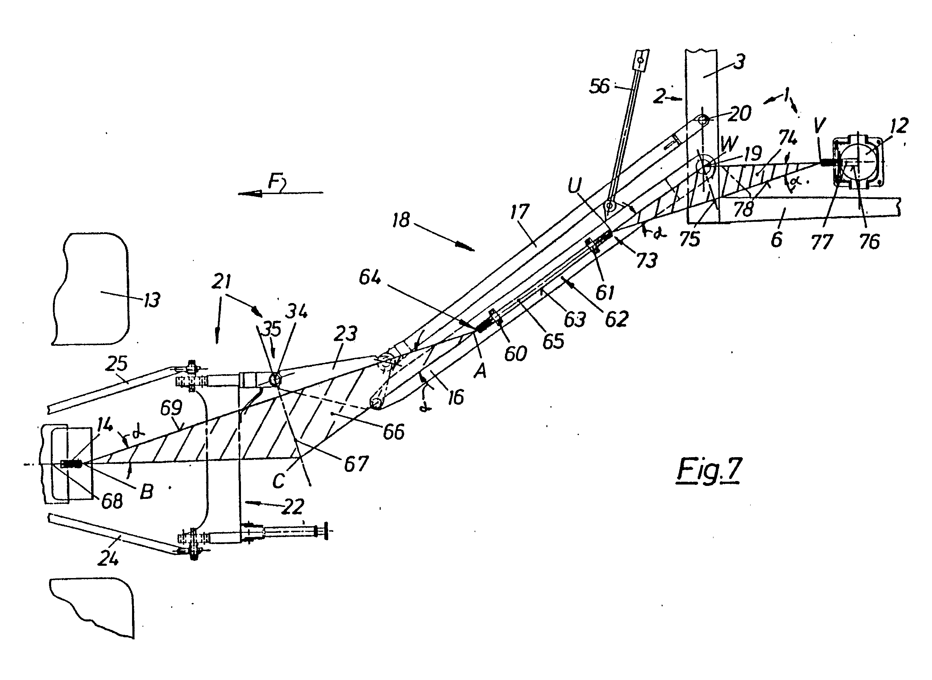

Um mögliche Kurvenfahrten des Anhängegerätes 1 bei angetriebenem Arbeitsgerät 10, wie sie in den Figuren, insbesondere in der Fig. 2, dargestellt sind, zu erreichen, sind die Wellen- bzw. Gelenkwellenabschnitte 59 von ihrer Länge, Anordnung und Ausbildung her dem Verbindungsglied 15 entsprechend zugeordnet. In der Fig. 7 ist diese Zuordnung entsprechend veranschaulicht. Bei in Arbeitsstellung ausgeschwenktem Anhängegerät 1 und bei der Geradeausfahrt des Schleppers 13 in Fahrtrichtung F ist das ortsfest auf dem Lenker 16 in Lagern 60, 61 drehbeweglich befestigte Teilstück 52 derart positioniert, daß das nach vorne zum Schlepper 13 zeigende Ende 64 bzw. das Ende der Wellenmittellinie 65 einen Eckpunkt A eines gleichschenkligen Dreiecks 66 bildet, der gespiegelt um die Mittelsenkrechte 67 den zweiten Eckpunkt B des Dreiecks 66 ergibt, der wiederum die Lage des Endes der Zapfwelle 14 des Schleppers 13 bzw. das Ende der Zapfwellenmittellinie 68 definiert. Der Schnittpunkt der als Strahl verlängerten Wellen und Zapfwellenmittellinien 65, 68 legt den dritten Eckpunkt C des Dreiecks 66 fest. Da das Dreieck 66 gleichschenklig ist, schniedet die Mittelsenkrechte 67 ebenfalls den Eckpunkt C. Verlängert man die Mittelsenkrechte 67 auf der Basis 69 in Richtung zur drehbeweglichen Verbindung 35, so schneidet die Mittelsenkrechte 67 die aufrechte Achse 34. Durch die Mittelsenkrechte 67 ist die optimale Lage der Achse 34 bestimmt. Solange die Achse 34 konstruktiv auf dieser Linie bewegt wird, ist ein günstiger Beugungswinkel der Gelenke 70, 71 der Gelenkwelle 72 gegeben (Fig. 1 und 2). Um einen optimalen Einschlagwinkel des Schleppers 13 zu erreichen, ist es zweckmäßig, daß die Gelenkwelle 72 beiderseits mit einem Weitwinkel-Gleichlauf-Gelenk ausgebildet ist. Die Länge der Gelenkwelle 72 ergibt sich aus der Länge der Basis 69 des Dreiecks 66.

Das nach hinten zeigende Ende 73 bzw. das Ende der Wellenmittellinie 65 des Teilstücks 62 der Wellen- bzw. Gelenkwellenabschnitte 59 bildet von seiner Lage her einen Eckpunkt U eines weiteren gleichschenkligen Dreiecks 74, der gespiegelt um eine Mittelsenkrechte 75 einen zweiten Eckpunkt V des Dreiecks 74 ergibt, der wiederum die Lage des Endes der Eingangswellenmittellinie 77 bestimmt. Die als Strahl verlängerten Wellen- und Eingangswellenmittellinien 65, 77 schneiden sich im dritten Eckpunkt W des Dreiecks 74. Die verlängerte Mittelsenkrechte 75 auf der Basis 78 des Dreiecks 74 schneidet die nach oben gerichtete Schwenkachse 19 des Lenkers 16 am Geräterahmen 2. Die Schwenkachse 19 und der Eckpunkt W des Dreiecks können zusammenfallen. Die Basis 78 gibt wieder die Lage und Länge der Gelenkwelle 79 an. Damit die Kraftübertragung von der Zapfwelle des Schleppers 13 auf das Arbeitsgerät 10 des Anhängegerätes 1 bei der Arbeit optimal verläuft, ist es vorteilhaft, wenn die an der Basis 69, 78 der Dreiecke 66, 74 anliegenden Winkel $\alpha$ gleich groß sind.

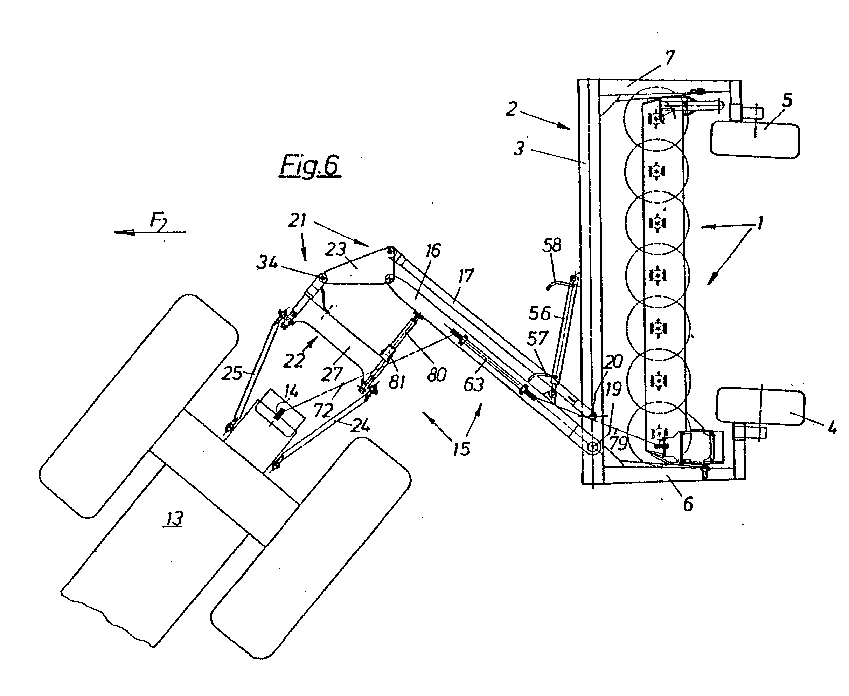

Die Gelenkwellenabschnitte 59 können auch bei einer Transport-und Straßenfahrtstellung in Antriebsverbindung bleiben. Sicherheitshalber ist jedoch ein Abstell- und Sicherheitsfuß 80 am Koppelglied 22 vorgesehen, der es verhindert, daß bei einer möglichen Linkskurve (Fig. 6) bei der Transport- und Straßenfahrt die Gelenkwelle 72 gestaucht und hierdurch beschädigt wird. Der Abstell- und Sicherheitsfuß 80 legt sich dann an den Lenker 16 an und verhindert eine weitere Drehung um die Drehachse 34. Der Abstell- und Sicherheitsfuß 80 weist auch ein über Selbsthemmung arretierbares Scharnier oder Kniegelenk 81 auf. Mit diesem Scharnier oder Kniegelenk 81 kann dieser als Abstellfuß durch Einknicken zum Erdboden für das Koppelglied 22 benutzt werden. Das Verbindungsgleid 15 und damit das Anhängegerät 1 selbst wird auf einem schwenkbaren Stützfuß 82 abgestellt.

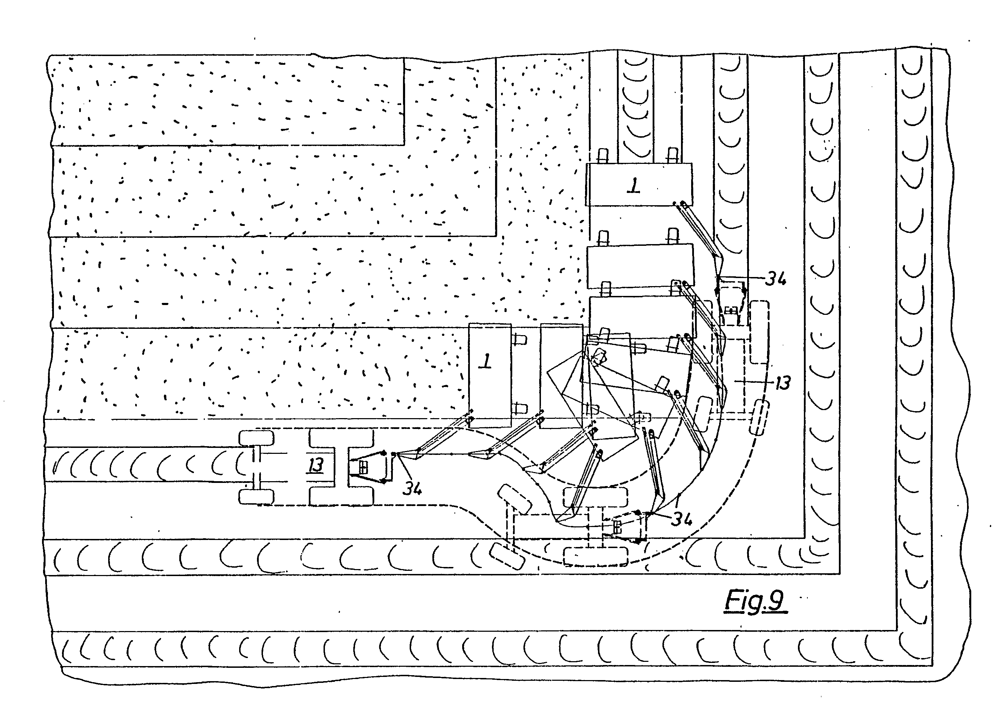

In Fig. 9 ist das Fahrverhalten des Anhängegerätes 1 hinter einem Schlepper 13 in einzelnen Phasen dargestellt. Die Fig. zeigt, daß beispielsweise beim Mähen von Erntegut das Anhängegerät 1 im rechten Winkel am Feldende gefahren werden kann und sogar eine Schwadablage in winkliger Anordnung erfolgt. Der Schlepperfahrer fährt den in Strichlinien angedeuteten Bogen (bezogen auf die Hinterräder des Schleppers) mit dem Schlepper 13 in Vorwärtsfahrt und das Anhängegerät 1 folgt dem Schlepper 13 wie dargestellt.

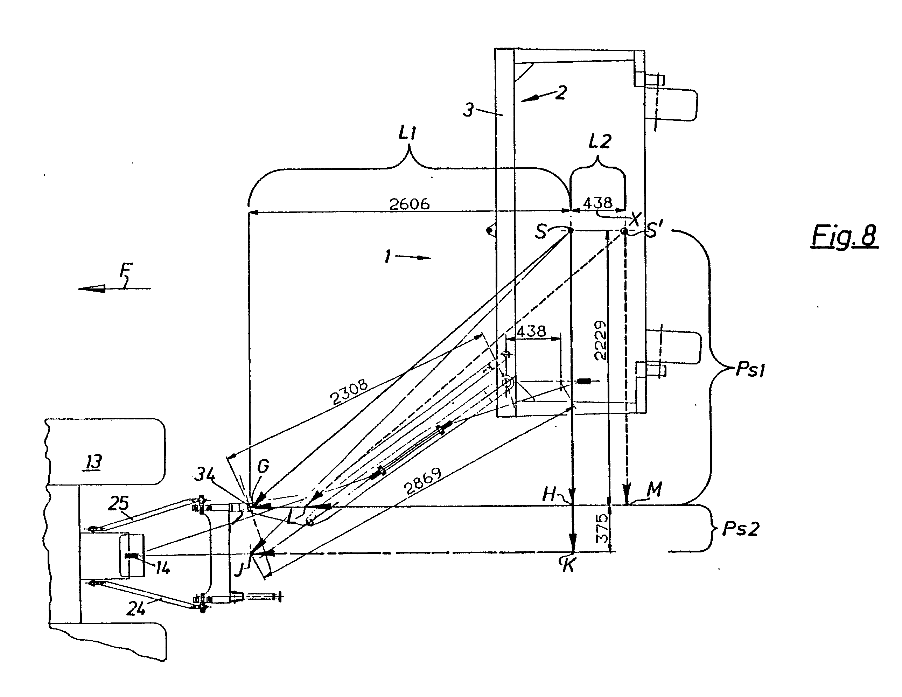

Die entstehenden zahlenmäßigen Vorteile der Ausbildung der Lenkerverbindung 21 des Verbindungsgliedes 15 gegenüber mittig angehängten Anhängegeräten sind aus den Kräfte-und Längenverhältnissen gemäß Fig. 8 ersichtlich. Hierbei zeigt das Krafteck GHS mit der Seitenkraft Ps1 die Ausführungsform gemäß der Erfindung. Der Schwerpunkt des Anhängegerätes ist hierbei mit S bezeichnet. Bei mittiger Anhängung und gleichem Abstand des Schwerpunktes S vom Schlepper 13 würde sich ein Krafteck JKS mit einer Seitenkraft Ps1 + Ps2 ergeben. Bei gleicher Seitenkraft Ps1 und mittiger Anhängung muß der Schwerpunkt S und damit das Anhängegerät um die Länge X entgegen der Fahrtrichtung F nach hinten verschoben werden, S nach S'. Es ergibt sich dann ein Krafteck LMS' mit einer Seitenkraft der Größe Ps1. Bei der letzteren Verschiebung ändert sich die Lenkbarkeit des Anhängegerätes negativ und die Anhängevorrichtung verteuert sich.

Aus Vorstehendem läßt sich nun die Gleichung über eine Verminderung der Seitenkraft aufstellen:

$$\text{Verminderung in \%} = \frac{Ps2 \cdot 100}{Ps1 + Ps2} =$$

$$= \frac{375 \cdot 100}{2229 + 375} = 14,40 \%$$

Über den Verschiebungsweg des Schwerpunktes von S' nach S läßt sich ebenfalls eine Gleichung aufstellen:

$$\text{Verminderung in \%} = \frac{L2 \cdot 100}{L1 + L2} = \frac{438 \cdot 100}{2606 + 438} = 14,38 \%$$

Die Änderung der wirklichen Länge des Verbindungsgliedes 15 ergibt gegenüber den bekannten Ausführungen eine Einkürzung von 2869 mm - 2308 mm = 561 mm = 19,55 %.

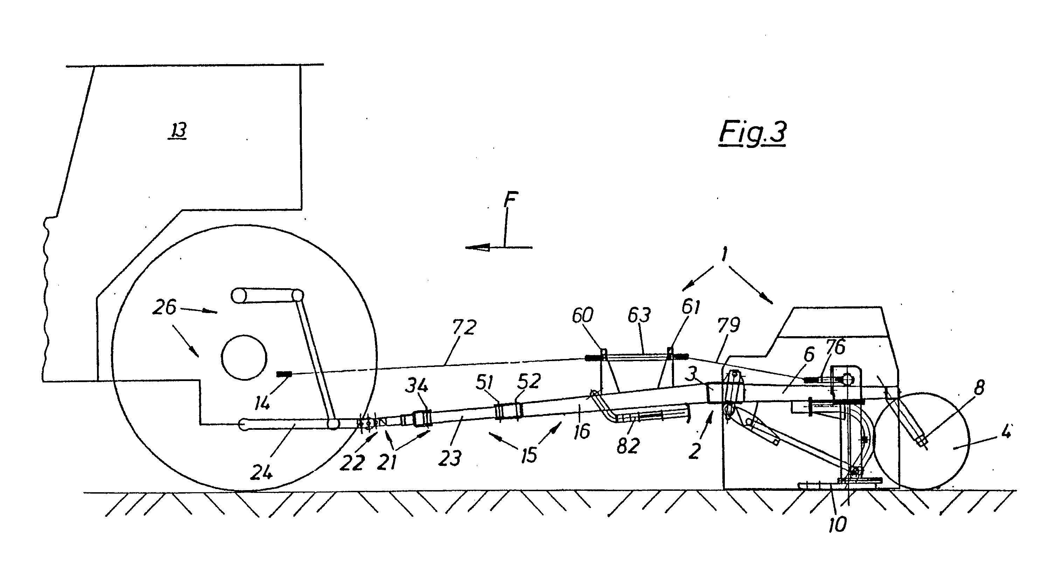

Wie in Fig. 3 ersichtlich, ist das Verbindungsglied 15 geradlinig ausgebildet, so daß durch seine Konstruktion selbst kein Biegemoment entsteht. Lediglich durch die Zugkraft, die auf das Anhängegerät 1 übertragen werden muß, entsteht ein geringes Biegemoment auf das Verbindungsglied 15. Das Verbindungsglied 15 ist hierdurch kostengünstig realisierbar.

Wenngleich die in den Figuren dargestellte Ausführung in Form einer üblichen Rechtsanhängung vorteilhaft ist, besteht auch die Möglichkeit einer Ausführung in Linksanhängung am Schlepper. Die obigen Ausführungen sind dann spiegelbildlich zu sehen.

**Ansprüche**

1. Landwirtschaftliches Anhängegerät mit einem vorzugsweise über Lauf- und Stützräder (4,5) auf dem Boden abstützbaren Geräterahmen (2), der über einen Zugrahmen (18) an einen landwirtschaftlichen Schlepper (13) ankoppelbar ist, welcher parallelschwenkbeweglich in einer in etwa parallel zum Erdboden ausgerichteten Ebene oder einer vom Schlepper (13) aus entgegen der Fahrtrichtung F ansteigend ausgerichteten Ebene geführte Lenker (16,17) sowie eine ein schlepperseitig befestigbares Koppelglied (22) aufweisende Lenkerverbindung (21) umfaßt, wobei die Lenker (16,17) um im wesentlichen aufrechte Achsen (19,20,51,52) verschwenkbar einerseits am Geräterahmen (2) und andererseits an der Lenkerverbindung (21) festlegbar sind, wobei zur Übertragung der Antriebskraft des Schleppers auf ein Getriebe (12) des Anhängegerätes Gelenkwellenabschnitte (59) als Übertragungsmittel vorgesehen sind, von denen ein Teilstück (63) in im wesentlichen lenkerparalleler Lage ortsfest auf einem der Lenker (16,17) in Lagern (60, 61) drehbeweglich abstützbar ist, und die Lenkerverbindung (21) außermittig am Schlepper (13) ankoppelbar ist und ein Zwischenglied (23) aufweist, an dem um im wesentlichen vertikal ausgerichtete Achsen (34,51,52) verschwenkbar einerseits das Koppelglied (22) und andererseits die Lenker (16,17) festlegbar sind.

2. Landwirtschaftliches Anhängegerät nach Anspruch 1, **dadurch gekennzeichnet,** daß das Koppelglied (22) der Lenkerverbindung (21) als Quertraverse (27) mit an Seitenendbereichen vorsehbaren Kupplungsstücken (28,29) zum Ankuppeln an Unterlenkerarme (24,25) einer Dreipunktanhängung (26) eines Schleppers ausgebildet ist und das Zwischenglied (23) an einem der äußeren Seitenbereiche der Quertraverse (27) mit diesem schwenkbeweglich verbindbar ist.

3. Landwirtschaftliches Anhängegerät nach einem der Ansprüche 1 oder 2, **dadurch gekennzeichnet,** daß das Zwischenglied (23) eine im wesentlichen dreieckförmige Gestalt hat, dessen längste Seiten in Fahrtrichtung (F) zusammenlaufen und das eine zur Erdbodenebene in etwa parallel oder entgegen der Fahrtrichtung leicht ansteigend ausgerichtete Lage hat, wobei jeweils in den Winkelbereichen (48,49,50) des Dreiecks die im wesentlichen vertikal ausgerichteten Schwenkachsen (34,51,52) vorgesehen sind.

4. Landwirtschaftliches Anhängegerät nach Anspruch 2 oder 3, **dadurch gekennzeichnet,** daß zwischen dem Koppelglied (22) und dem Zwischenglied (23) eine Gelenkverbindung (35) mit einer annähernd parallel zur Fahrtrichtung (F) verlaufenden Schwenkachse (36) und einer im wesentlichen senkrecht zum Erdboden ausgerichteten Schwenkachse (34) vorgesehen ist.

5. Landwirtschaftliches Anhängegerät nach einem der Ansprüche 1 bis 4, **dadurch gekennzeichnet,** daß das Koppelglied (22) an der Dreipunktanhängung (26) des Schleppers (13) um eine im wesentlichen quer zur Fahrtrichtung (F) verlaufende Achse (27') schwenkbeweglich abstützbar ist.

6. Landwirtschaftliches Anhängegerät nach einem der Ansprüche 1 bis 5, **dadurch gekennzeichnet,** daß das Koppelglied (22) Kupplungsstücke (28,29) hat, die zur Lagerveränderung der annähernd vertikal ausgerichteten Schwenkachse (34) in oder entgegen der Fahrtrichtung (F) positionsveränderlich am Koppelglied (22) festlegbar sind.

7. Landwirtschaftliches Anhängegerät nach einem der Ansprüche 1 bis 6, **dadurchgekennzeichnet,** daß bei in Arbeitsstellung ausgeschwenktem Anhängegerät (1) und bei Geradeausfahrt des Schleppers (13) in Fahrtrichtung (F) das ortsfest auf dem Lenker (16) in den Lagern (60,61) drehbeweglich befestigte Teilstück (62) derart positionierbar ist, daß das nach vorne zum Schlepper (13) weisende Ende (64) bzw. das Ende der Wellenmittellinie (65) einen Eckpunkt (A) eines gleichschenkligen Dreiecks (66) bildet, der gespiegelt um die Mittelsenkrechte (67) den zweiten Eckpunkt (B) des Dreiecks (66) ergibt, welcher die Lage des Endes der Zapfwelle (14) des Schleppers (13) bzw. das Ende der Zapfwellenmittellinie (68) definiert, die als strahlverlängerte Wellen- und Zapfwellenmittellinien (65,68) einen Schnittpunkt bilden, welcher den dritten Eckpunkt (C) des Dreiecks bestimmt, und die verlängerte Mittelsenkrechte (67) auf der Basis (69) des Dreiecks (66) die Drehachse (34) am Koppelglied (22) schneidet.

8. Landwirtschaftliches Anhängegerät nach einem der Ansprüche 1 bis 7, **dadurchgekennzeichnet,** daß bei in Arbeits-und Betriebsstellung überführtem Anhängegerät (1) das ortsfest auf dem Lenker (16) in Lagern (60,61) drehbeweglich befestigte Teilstück (62) derart positionierbar ist, daß das nach hinten zeigende Ende (73) bzw. das Ende der Wellenmittellinie (65) einen Eckpunkt (U) eines gleichschenkligen Dreiecks (74) bildet, der gespiegelt um eine Mittelsenkrechte (75) den zweiten Eckpunkt (V) des Dreiecks (74) ergibt, welcher die Lage des Endes der Eingangswelle (76) am Hauptgetriebe (12) des Anhängegerätes (1) bzw. den Anfang der Eingangswellenmittellinie (77) definiert, die als Strahl verlängerten Wellen- und Eingangswellenmittellinien (65,67) einen Schnittpunkt bilden, welcher den dritten Eckpunkt (W) des Dreiecks (74) bestimmt, und die verlängerte Mittelsenkrechte (75) auf der Basis (78) des Dreiecks (74) die nach oben gerichtete Schwenkachse (19) des Lenkers (16) am Geräterahmen (2) schneidet, wobei die Schwenkachse (19) derart vorsehbar ist, daß der Eckpunkt (W) des Dreiecks (74) und die Schwenkachse (19) zusammenfallen.

9. Landwirtschaftliches Anhängegerät nach den Ansprüchen 7 und 8, **dadurchgekennzeichnet,** daß die an der Basis (69,78) der Dreiecke (66,74) anliegenden Winkel ($\alpha$) im wesentlichen einander entsprechen.

10. Landwirtschaftliches Anhängegerät nach den Ansprüchen 7, 8 und 9, **dadurchgekennzeichnet,** daß die Basis (69, 78) der Dreiecke (66,74) die Lage und Länge der Gelenkwellenabschnitte (59, 63) bestimmt, wobei der durch die Basis (69) bestimmte Gelenkwellenabschnitt mit beidseitigem Weitwinkel-Gleichlauf-Gelenk vorsehbar ist.

11. Landwirtschaftliches Anhängegerät nach einem der Ansprüche 1 bis 10, **dadurchgekennzeichnet,** daß an dem Koppelglied (22) in einem äußeren Seitenbereich ein Abstell-und Sicherheitsfuß (80) vorsehbar ist.

12. Landwirtschaftliches Anhängegerät nach Anspruch 11, **dadurchgekennzeichnet,** daß der Abstell- und Sicherheitsfuß (80) über ein durch Selbsthemmung arretierbares Scharnier oder Kniegelenk (81) am

EP 0 289 773 B1

Koppelglied (22) befestigbar ist.

## Claims

1. An agricultural trailer implement with an implement frame (2) which is adapted to be supported on the ground via jockey wheels (4, 5) and coupled via a trailer coupling frame (18) to an agricultural tractor (13) comprising link members (16, 17) adapted for parallel pivoting movement in a plane substantially parallel with the ground or in a plane orientated to rise from the tractor (13) and against the direction of travel F and also comprising a link member connection (21) having a coupling member (22) for attachment at the tractor end, the link members (16, 17) having one end attached to the implement frame (2) and the other attached to the link member connection (21) and being pivotable about substantially vertical axes (199, 20, 51 , 52), transmission of the driving force of the tractor to a gear mechanism (12) on the trailer implement being accomplished via articulated shaft portions (59) which serve as the transmission means and of which a portion (63) can be supported for rotary movement in bearings (60, 61) in a position substantially parallel with the link members and rigidly on one of the link members (16, 17), the link member connection (21) being adapted to be coupled eccentrically on the tractor (13) and having an intermediate member (23) on which it is possible to attach the coupling member (22) on the one hand and the link members (16, 17) on the other, so that they can pivot about substantially vertically orientated axes (34, 51, 52).

2. An agricultural trailer implement according to Claim 1, characterised in that the coupling member (22) of the link member connection (21) is constructed as a cross member (27) with, possibly provided at lateral end portions, coupling pieces (28, 29) for coupling to bottom link arms (24, 25) of a three-point mounting (26) of a tractor, the intermediate member (23) being adapted to be connected thereto for pivoting movement, on one of the outer side portions of the cross member (27).

3. An agricultural trailer implement according to one of Claims 1 or 2, characterised in that the intermediate member (23) is of substantially triangular form, its longest sides converging in the direction of travel (F) and which is substantially parallel with the plane of the ground or may rise slightly against the direction of travel, substantially vertically orientated pivot axes (34, 51, 52) being provided in each case in the angled portions (48, 49, 50) of the triangle.

4. An agricultural trailer implement according to Claim 2 or 3, characterised in that between the coupling member (22) and the intermediate member (23) there is an articulating joint (35) with a pivot axis (36) extending virtually parallel with the direction of travel (F) and having a pivot axis (34) which is orientated substantially at right-angles to the ground.

5. An agricultural trailer implement according to one of Claims 1 to 4, characterised in that the coupling member (22) can be supported on the three-point attachment (26) of the tractor (13) to be pivotally movable about an axis (27') which extends substantially cross-wise to the direction of travel (F).

6. An agricultural trailer implement according to one of Claims 1 to 5, characterised in that the coupling member (22) has coupling pieces (28, 29) which in order to change the position of the approximately vertically orientated pivot axis (34) in or against the direction of travel (F) can be fixed in a variable position on the coupling member (22).

7. An agricultural trailer implement according to one of Claims 1 to 6, characterised in that when the trailer implement (1) is swung out and in the working position and when the tractor (13) is travelling straight forward in the direction (F) the part (62) which is mounted for rotary movement in the bearings (60, 61) and rigidly on the link member (16) can be so positioned that the end (64) which is directed forwardly towards the tractor (13) or the end of the central line (65) through the shaft forms a corner (A) of an equilateral triangle (66) which, mirrored about the vertical line (67) through the centre forms the second corner point (B) of the triangle (66) which defines the position of the end of the take-off shaft (14) of the tractor (13) or the end of the central line (68) through the power take-off shaft and which, as extended shaft and power take-off shaft median lines (65, 68) form an intersection which defines the third corner point (C) of the triangle while the extended vertical line (67) through the centre on the base (69) of the triangle (66) cuts the axis (34) of rotation on the coupling member (22).

8

8. An agricultural trailer implement according to one of Claims 1 to 7, characterised in that when the trailer implement (1) is moved to the working and operative position, the part (62) which is attached for rotary movement in bearings (60, 61) rigidly on the link member (16) can be so positioned that the rearwardly pointing end (73) or the end of the median line (65) through the shaft forms a corner point U of an equilateral triangle (74) which, mirrored about a central vertical line (75), forms the second corner point (V) of the triangle (74) which defines the position of the end of the input shaft (76) on the main gear mechanism (12) of the trailer implement (1) or the start of the input shaft central line (77) and which, as extended central lines (65, 67) through the shaft and the input shaft, form an intersection which determines the third corner point (W) of the triangle (74) while the extended central vertical line (75) on the base (78) of the triangle (74) cuts the upwardly directed pivot axis (19) of the link member (16) on the implement frame (2), the pivot axis (19) being so foreseeable that the corner point (W) of the triangle (74) and the pivot axis (19) coincide.

9. An agricultural trailer implement according to Claims 7 and 8, characterised in that the angle (a) bearing on the base (69, 78) of the triangles (66, 74) substantially correspond to each other.

10. An agricultural trailer implement according to Claims 7, 8 and 9, characterised in that the base (69, 78) of the triangles (66, 74) determines the position and length of the articulated shaft portions (59, 63) the articulated shaft portion determined by the base (69) being capable of being provided with a wide angle synchronous joint at both ends.

11. An agricultural trailer implement according to one of Claims 1 to 10, characterised in that it is possible to provide on the coupling member (22) in an outer side portion a steadying and safety stay (80).

12. An agricultural trailer implement according to Claim 11, characterised in that the steadying and safety stay (80) can be fixed to the coupling member (22) by means of a hinge or knee joint (81) which can be locked by a self-locking arrangement.

## Revendications

1. Dispositif d'attelage agricole avec un bâti (2) pouvant s'appuyer sur le sol de préférence au moyen de roues (4, 5) de marche et d'appui, qui peut être attelé à un tracteur agricole (13) au moyen d'un châssis de traction (18), lequel comprend des bras directeurs articulés (16, 17), pivotant parallèlement, guidés dans un plan s'étendant à peu près de façon parallèle au sol ou dans un plan s'étendant en montant depuis le tracteur (13) en sens contraire du sens de marche (F), ainsi qu'une liaison par bras directeurs articulés (21) présentant un organe de liaison (22) pouvant se fixer du côté du tracteur, les bras directeurs articulés (16, 17) pouvant être montés de façon pivotante sur des axes (19, 20, 51, 52), en gros verticaux, d'un côté au bâti (2) et de l'autre côté à la liaison articulée (21), caractérisé en ce que des éléments de cardan (59) sont prévus comme organes de transmission pour la transmission de puissance du tracteur à une boîte de transmission (12) du dispositif d'attelage, élément de cardan dont une section (63) est susceptible de s'appuyer à poste fixe de façon à tourner dans des paliers (60, 61) disposés sur l'un des bras articulés (16, 17) dans une position essentiellement parallèle au bras directeur articulé, tandis que la liaison articulée (21) est susceptible d'être accouplée au tracteur (13) de façon excentrée et possède un organe intermédiaire (23), auquel peuvent être fixés d'une part l'organe de liaison (22) pouvant pivoter sur des axes (34, 51, 52) essentiellement verticaux et d'autre part les bras articulés (16, 17).

2. Dispositif d'attelage agricole selon la revendication 1, caractérisé en ce que l'organe de liaison (22) de la liaison articulée (21) est constitué comme une barre transversale (27) avec aux extrémités latérales des pièces d'accouplement (28, 29) pour l'atteler aux bras inférieurs de relevage (24, 25) de l'attelage trois points (26) d'un tracteur et en ce que l'organe intermédiaire (23) peut être relié à l'une des extrémités extérieures de la barre transversale (27) en pivotant avec celle-ci.

3. Dispositif d'attelage agricole selon l'une des revendications 1 ou 2, caractérisé en ce que l'organe intermédiaire (23) a une forme en gros triangulaire dont les côtés les plus longs s'étendent dans le sens de la marche (F) et a une position légèrement montante par rapport au sol dans un sens à peu près parallèle à la marche ou inverse de celle-ci, étant précisé que chaque fois que les axes de pivotement (34, 51, 52) essentiellement orientés verticalement sont disposés dans les zones angulaires (48, 49, 50) du triangle.

4. Dispositif d'attelage agricole selon les revendications 2 ou 3, caractérisé en ce qu'il est prévu une liaison articulée (35) entre l'organe d'accouplement (22) et l'organe intermédiaire (23) avec un axe de pivotement (36) s'étendant de façon à peu près parallèle au sens de la marche (F) et un axe de pivotement (34) dirigé essentiellement perpendiculairement au sol.

5. Dispositif d'attelage agricole selon l'une des revendications 1 à 4, caractérisé en ce que l'organe d'accouplement (22) peut être monté sur l'attelage trois points (26) du tracteur (13) de façon pivotante sur un axe (27') s'étendant essentiellement perpendiculairement au sens de la marche (F).

6. Dispositif d'attelage agricole selon l'une des revendications 1 à 5, caractérisé en ce que l'organe d'accouplement (22) possède des pièces d'accouplement (28, 29), qui peuvent être fixées à l'organe d'accouplement (22) dans des positions variables dans le sens de la marche (F) ou en sens inverse de façon à pouvoir modifier la position de l'axe de pivotement (34) orienté de façon à peu près verticale.

7. Dispositif d'attelage agricole selon l'une des revendications 1 à 6, caractérisé en ce que, quand le dispositif d'attelage est abaissé en position de travail et quand le tracteur (13) avance en ligne droite dans le sens de la marche (F), l'élément (62) monté en position fixe sur le bras articulé (16), de façon à pouvoir tourner dans les paliers (60, 61), est positionné de telle façon que l'extrémité (64) située en avant vers le tracteur (13) au plutôt l'extrémité de l'axe médian (65) du cardan constitue le sommet (A) d'un triangle isocèle (66) symétrique du deuxième sommet (B) du triangle (66) par rapport à la médiatrice (67), sommet (B) qui est constitué par l'extrémité de la prise de force (14) du tracteur (13), ou plutôt par l'extrémité de l'axe médian (68) de la prise de force, l'intersection des axes (65, 68) de la prise de force et du cardan déterminant le troisième sommet (C) du triangle et la médiatrice (67) du triangle (66) relative à la base (69) passant par l'axe de rotation (34) monté sur l'organe d'accouplement (22).

8. Dispositif d'attelage agricole selon l'une des revendications 1 à 7, caractérisé en ce que, lorsque le dispositif d'attelage (1) est en position de travail et de marche, l'élément (62) monté à poste fixe sur le bras articulé (16) de façon à pouvoir tourner dans les paliers (60, 61) peut être positionné de telle sorte que l'extrémité (73) s'étendant vers l'arrière, ou plutôt l'extrémité de l'axe médian (65) du cardan constitue l'angle (U) d'un triangle isocèle (74), qui est symétrique d'un deuxième angle (V) du triangle (74) par rapport à la médiatrice (75), angle (V) qui détermine la position de l'extrémité de l'arbre d'entrée (76) de la boîte principale de transmission (12) de l'instrument de remorquage (1), ou plutôt le début de l'axe médian (77) de cet arbre d'entrée, l'intersection des axes médians (65, 67) du cardan et de l'arbre entrée constituant le troisième sommet (W) du triangle (74) et le prolongement de la médiatrice (75) relative à la base (78) du triangle (74) passant par l'axe de pivotement (19) du bras articulé (16) fixé au bâti (2), axe dirigé vers le haut, l'axe de pivotement (19) étant disposé de telle façon que l'angle (W) du triangle (74) et l'axe de pivotement (19) coïncident.

9. Dispositif d'attelage agricole selon les revendications 7 et 8, caractérisé en ce que les angles (a) adjacents aux bases (69, 78) des triangles (66, 74) sont sensiblement égaux.

10. Dispositif d'attelage agricole selon les revendications 7, 8 et 9, caractérisé en ce que les bases (69, 78) des triangles (66, 74) déterminent la position et la longueur des cardans (59, 63), le cardan défini par la base (69) pouvant être muni de joints de cardan à grand angle de même course des deux côtés.

11. Dispositif d'attelage agricole selon l'une des revendications 1 à 10, caractérisé en ce que l'organe d'accouplement (22) peut être muni d'une bielle d'écartement et de sécurité (80) dans la zone latérale extérieure.

12. Dispositif d'attelage agricole selon la revendication 11, caractérisé en ce que la bielle d'écartement et de sécurité (80) peut être fixée par l'intermédiaire d'une charnière ou d'une genouillère (81) encliquetable par autofreinage.

Fig.1

_Fig.2_

Fig.3

Fig.4

Fig.5

Fig.6

Fig.7

Fig.8

18

Fig.9